# EUROPÄISCHE PATENTSCHRIFT

(11) **EP 1 926 634 B1**
(45) Veröffentlichungstag und Bekanntmachung des Hinweises auf die Patenterteilung: **15.05.2013**
(21) Anmeldenummer: 06791977.9
(22) Anmeldetag: 11.09.2006
(51) Int. Cl.: B60R 13/02

(54) **HERSTELLUNGSVERFAHREN FÜR EIN DEKORIERTES VERKLEIDUNGSTEIL**
MANUFACTURE PROCESS FOR A DECORATED TRIM PART
PROCEDE DE FABRICATION POUR UNE PIECE D'HABILLAGE INTERIEURE

(30) Priorität: 09.09.2005 DE 102005043179
(43) Veröffentlichungstag der Anmeldung: 04.06.2008
(73) Patentinhaber: Johnson Controls Interiors GmbH & Co. KG, 47929 Grefrath (DE); Nordenia Deutschland Gronau GmbH, 48599 Gronau (DE)
(72) Erfinder: PARUCHURI, Sreenivas, 40221 Düsseldorf (DE); WOLF, Stephan, 47906 Kempen (DE); ANGENHEISTER, Paul, 47918 Tönisvorst (DE); MANIATOPOULOS, Vassilios, 51399 Burscheid (DE); GEURTS, Patrick, 87497 Wertach (DE); KIRIAZIS, Leonidas, 48151 Münster (DE)
(74) Vertreter: Wolff, Felix
(86) Internationale Anmeldenummer: PCT/EP2006/008829
(87) Internationale Veröffentlichungsnummer: WO 2007/028651

(56) Entgegenhaltungen:
- EP-A- 0 949 120
- EP-A1- 1 477 367
- EP-A2- 0 754 740
- DE-A1- 19 834 199
- US-A- 5 709 925
- US-A1- 2005 194 825

## Beschreibung

Die vorliegende Erfindung betrifft ein Herstellungsverfahren für ein Verkleidungsteil für den Innenraum eines Kraftfahrzeuges bestehend aus einem Substrat und einer damit verbundenen Folie.

Die Innenverkleidung von Kraftfahrzeugen stehen heutzutage aus einer Vielzahl von Förmkörpern, die aus einem Substrat bestehen, das für die entsprechende Formstabilität des Formkörpers sorgt und die auftretenden mechanischen Kräfte aufnimmt. Dieses Substrat ist oftmals mit einer Folie kaschiert, um die optische Anmutung im Innenbereich des Kraftfahrzeuges zu erhöhen. In der Vergangenheit handelte es sich bei diesen Folien oftmals um relativ dicke "In mold Decoration" (IMD)-Folien, die jedoch vergleichsweise teuer und/oder wenig kratzbeständig und/oder sehr glänzend sind (mit Glanzgraden nach der VDA-Norm 621-409 von größer als beispielsweise 10 bzw. größer als 20 bzw. größer als 30). Derartige verfahren sind beispielsweise in der EP 1 477 367 A1, der US 5,709,925, der DE 198 34 199 A1 und der EP 0 949 120 A1 offenbart. Ein Herstellungsverfahren gemäß Oberbegriff des Anspruch 1 ist aus der EP 0 754 740 A2 bekannt.

Es war deshalb die Aufgabe der vorliegenden Erfindung, ein Herstellungsverfahren für ein Verkleidungsteil für den Innenraum eines Kraftfahrzeuges zur Verfügung zu stellen, das die Nachteile des Standes der Technik nicht aufweist.

Gelost wird die Aufgabe mit einem Herstellungsverfahren nach Anspruch 1.

Es war für den Fachmann überaus erstaunlich und nicht zu erwarten, dass das Verkleidungsteil vergleichsweise kostengünstig herzustellen und zu verarbeiten ist. Das erfindungsgemäße Verkleidungsteil weist eine hohe Kratzfestigkeit auf und kann mit einer Vielzahl von Dekoren versehen werden.

Der Förmkörper bzw. das Substrat wird erfindungsgmäß mit der Folie zumindest einseitig beschichtet. Hierbei findet als Folie bzw. als Beschichtungsfolie eine Folie Verwendung, welche eine Dicke von höchstens 500µm aufweist. Vorzugsweise beträgt die Schichtdicke der Folie weniger als 500 µm, besonders bevorzugt von weniger als oder etwa gleich 400 µm, ganz besonders bevorzugt von weniger als oder etwa gleich 300 µm oder im Bereich zwischen etwa 300 µm und etwa 400 µm. Es ist hierdurch möglich, dass erhebliche Kosteneinsparungen am Gesamtbauteil dadurch möglich sind, dass erheblich weniger Material für die Folie verwendet sowie ein kostengünstigeres Material und/oder Herstellungsverfahren für die Folie verwendet wird.

Erfindungsgemäß wrist die Folie auf ihrer dem Substrat abgewandten Seite (Sichtseite) einen vorab auf die Folie aufgetragenen Lack bzw. eine vorab auf die Folie aufgetragene Lackschicht auf. Hierdurch kann in vorteilhafter Weise das Aussehen des Verkleidungsteils auf der mit der Folie kaschierten Seite (Sichtseite) in besonders einfacher Weise variiert und durch Variation bzw. Einstellung des Lackes bzw. der Lackschicht eingestellt werden.

Ferner ist es erfindungsgemäß bevorzugt, dass die Lackschicht eine Schichtdicke von etwa 1 µm bis etwa 30 µm aufweist, bevorzugt von etwa 5 µm bis etwa 20 µm, besonders bevorzugt von etwa 10 µm bzw, bevorzugt von maximal etwa 10µm. Die restliche Dicke der Folie von bevorzugt knapp 300 µm (bei einer Gesamtdicke der Folie von beispielsweise 300 µm) bis etwa knapp 400 µm (bei einer Gesamtdicke der Folie von beispielsweise 400 µm) wird bevorzugt von einem Mehrschichtfolienaufbau gebildet, d.h. durch einen Folienaufbau mit zumindest einer Schicht und einer weiteren Schicht. Alternativ kann es sich um eine sogenannte Monofolie handeln. D.h. die Folie umfasst nur eine Schicht, die aus mehreren Materialien bestehen kann. Unter den Begriff Monofolie fällt auch eine Folie, die zwar mehrere Schichten enthält, wobei diese Schichten aber identische Materialzusammensetzungen aufweisen.

Zur Herstellung des fertigen Verkleidungsteils, insbesondere Fahrzeugverkleidungsteils, wird diese Folie inklusive des Lackes mit einem Kunststoffträger bzw. mit dem Substrat verbunden. Es kann hierbei entweder vorgesehen sein, dass die Folie mitsamt der Lackschicht in flacher Form, d.h. eben, in ein Werkzeug zur Herstellung des Verkleidungsteils eingelegt wird und anschließend in einem einzigen Herstellungsschritt durch Einspritzen eines Kunststoffmaterials zur Herstellung des Substrats eine Formgebung sowohl des Kunststoffträgers als auch der Folie mit samt der Lackschicht erfolgt, wobei während dieses Formschrittes gleichzeitig auch eine sogenannte Narbung auf der Sichtseite des Lacks bzw. auf der Sichtseite der Folie hergestellt wird. Bei dem Herstellungsverfahren handelt es sich immer um ein sogenanntes Inmoldgraining-Verfahren (IMG-Verfahren), bei dem eine Narbe in die Lackschicht bzw. in die Folienschicht des Verkleidungsteils eingebracht wird. Bei diesem Verfahren kann es sich sowohl um ein Spritzgussverfahren (Injection molding) oder auch um ein Spritzpressverfahren handeln (Transfer molding).

Für den Fall, dass die Folie in ebenem Zustand verarbeitet und direkt in die endgültige Form gebracht wird, kann es vorgesehen sein, dass die Folie vor dem Verformungsschritt angewärmt wird, so dass sie sich leichter verformt. Es ist ein wesentlicher Vorteil der vorliegenden Erfindung, dass es beim Zusammenbringen des Materials der Folie mit dem Material des Substrats zu keiner Zerstörung der Folie kommt. Trotzdem muss die Folie derart leicht verformbar sein, dass sie sich auch den Feinheiten der Struktur des Werkzeugs anpasst. Insbesondere ist es wichtig, dass aufgrund der geringen Dicke der Folie eine Zerstörung der Folie während des Einbringens bzw. Einschießens des (flüssigen und beispielsweise etwa 270 °C heißen) Kunststoffmaterials für den Träger beim Spritzgießen vermieden wird. Für den Fall, dass die Folie in einem ersten Schritt tiefgezogen wird, d.h. vorverformt wird und erst in einem zweiten Verformungsschritt gemeinsam mit dem Kunststoffmaterial des Trägers in die endgültige Form gebracht wird, wird in der Regel keine Anwärmung der Folie vor dem zweiten Formungsschritt vorgesehen. Dennoch ist auch hier auf eine genügende Stabilität der Folie insbesondere beim Zusammenbringen mit dem (insbesondere heißen und unter Druck stehenden) Material des Trägers zu achten. Bei dem Tiefziehvorgang beim ersten Verfahrensschritt wird eine Verformung in der Regel von etwa 95% der endgültigen Verformung ausgeführt.

Ein Beschnitt bzw. eine Kantenbearbeitung erfolgt für den Fall der einstufigen Verformung der Folie in der Regel nach dem Verformungsschritt. Hierbei ist nach dem Verformungsschritt sowohl ein Beschneidungsschritt der Folie auch ein Umbug der Folie möglich. Bei dem zweistufigen Herstellungsverfahren (tiefgezogene Folie im ersten Verfahrensschritt) ist es gemäß der vorliegenden Erfindung möglich, dass zwischen dem ersten und dem zweiten Verformungsschritt ein Stanzschritt bzw. ein Beschneidungsschritt der Folie erfolgt. In diesem Fall ist keine Nachbearbeitung des Bauteils im Anschluss an den zweiten Verformungsschritt erforderlich. Es kann aber auch vorgesehen sein, dass ein Beschneidungsschritt bzw. ein Stanzschritt erst nach dem zweiten Verformungsschritt erfolgt.

Die Entformung des fertigen Verkleidungsteils mit verbundener Folie auf dessen Sichtseite erfolgt in allen Verformungsschritten gemäß bekannten Technologien.

Gemäß der vorliegenden Erfindung kommen mehrere Materialsysteme bzw. Kombinationen von Materialsystemen für das Verkleidungsteil bzw. Fahrzeugverkleidungsteil in Frage. Eine erste Kombination von Materialien sieht vor, dass es sich bei dem Lack bzw. bei der auf der Sichtseite der Folie vorgesehenen Lackschicht um einen Polyurethanlack handelt, dass es sich bei der Mehrschichtfolie um eine Polypropylen-Copolymerisat- Mehrschichtfolie handelt und dass es sich bei dem Kunststoffträger um einen Polypropylen-Kunststoffträger, gegebenenfalls mit Füllstoffen oder Verstärkungsstoffen wie Fasern oder dergleichen, handelt, wobei der Kunststoffträger auch geschäumt sein kann. Bei einer weiteren Materialkombination des Fahrzeugverkleidungsteils handelt es sich bei der Lackschicht ebenfalls um eine Polyurethan-Lackschicht, bei der Folie ebenfalls um eine Polypropylen-Copolymerisat- Mehrschichtfolie mit einem speziellen Haftvermittler und bei dem Kunststoffmaterial des Kunststoffträgers um ein ABS und oder PC Material (ABS=Acrylnitrylbutadienstyrol, PC=Polycarbonat). Hierbei handelt es sich sowohl bei dem Trägermaterial aus Polyproylen-Kunststoff bzw. bei dem Trägermaterial aus ABS bzw. PC Kunststoff um handelsübliche Kunststoffmaterialien, die beispielsweise mit bis zu 30% Glasfasern und oder mit bis zu 30% Talkum versehen sind, wobei beide Zusatzmaterialien theoretisch bis zu 50% zugesetzt sein können und wobei der eigentliche Kunststoffanteil (d.h. der Polyproylenanteil im Falle des Kunststoffträgers auf Polypropylenbasis bzw. der ABS/PC Anteil für den Kunststoffträger auf ABS und/oder PC-Basis) jedenfalls mindestens 50% beträgt.

Erfindungsgemäß ist es daher bevorzugt, dass die Lackschicht polyurethanbasiert vorgesehen ist und bevorzugt ein thermoplastisches oder ein reaktives Zweikomponenten-Polyurethan-System umfasst bzw. dass die Lackschicht eine hohe Kratzbeständigkeit und/oder eine hohe Chemikalienbestähdigkeit und/oder eine hohe UV-Beständigkeit und/oder eine hohe Schreibunempfindlichkeit aufweist bzw. dass die Lackschicht optisch eine matte Anmutung (Oberfläche mit speziellen Glanzgraden im Sinne eines vergleichsweise geringen Glanzes) aufweist sowie weiterhin einen haptisch weichen Griffeindruck (soft touch) aufweist. Hierbei wird die Glanzmessung beispielsweise nach VDA 621-409 gemessen, wobei erfindungsgemäß insbesondere ein Glanzgrad von gleich 0,5 bzw. von größer als 0,5 realisierbar ist, beispielsweise ein Glanzgrad von etwa 0,5 bis etwa 1,5 oder ein Glanzgrad von etwa 0,5 bis etwa 4,0 oder ein Glanzgrad von etwa 1,5 bis etwa 4,0 realisierbar ist. Die Kratzfestigkeit wird hierbei beispielsweise mit einem sogenannten Erichsen-Stift bestimmt, wobei erfindungsgemäß Kratzfestigkeiten bis zu einer Belastung von bis zu 20 N erfindungsgemäß erzielbar sind. Alternativ wird die Kraftfestigkeit mit einer sogenannten Gitterprüfung durchgeführt, wobei farbmetrisch der sogenannte Delta-L-Wert (bei einer Belastung von beispielsweise 5 N, 10 N und 15 N) gemessen wird. Weiterhin alternativ wird die Kratzfestigkeit mit einer sogenannten Fünf-Finger-Prüfung (mit unterschiedlich belasteten Stiften von 2 N bis 25 N) bestimmt bzw. gemäß der Herstellemorm BMW PA0015 bzw. PA0016 bestimmt. Erfindungsgemäß ist es bei der Kraftfestigkeit möglich, eine Beschädigungsfreiheit (kein sichtbares Kraftbild durch eine Beschädigung der Oberfläche) bis zu einer Kraftausübung von 7 N oder auch bis zu 15 N zu erzielen. Die Schreibunempfindlichkeit wird erfindungsgemäß beispielsweise gemäß einer der Herstellernormen GM9150P (General Motors) oder LP-463 / PB-5401 (Chrysler) bestimmt. Hinsichtlich der Chemikalienbeständigkeit geht es in der Regel um eine übliche Chemikalienbeständigkeit gemäß verschiedenen Herstellernormen gegenüber insbesondere Benzin, Isopropanol, Methanol und eine Reihe von marktüblichen "Auto-Reinigungsmittel". Erfindungsgemäß ist es insbesondere bevorzugt, dass die Oberfläche des fertigen Verkleidungsteils einen Glanzgrad von unter etwa 1,5 (beispielsweise gemäß VDA 621-409) aufweist und zusätzlich eine Kratzbeständigkeit von mindestens beispielsweise etwa 10 N (nach einer der o.g. Testmethoden) aufweist.

Bei der Folie kann es sich um eine einschichtige Folie handeln (beispielsweise eine polypropylenbasierte Monofolie, die insbesondere entweder von vornherein als einschichtige Folie hergestellt wird oder bei der Herstellung aus mehreren (gleichartigen) Schichten hergestellt sein kann) oder aber auch um eine mehrschichtige Folie handeln (d.h. die Folie weist im zuletztgenannten Fall wenigstens eine Schicht und eine (davon unterschiedliche) weitere Schicht auf mit insgesamt beispielsweise drei oder fünf Schichten (exklusive der äußeren Lackschicht)), wobei mindestens die eine Schicht aus Polypropylen besteht. Vorzugsweise handelt es sich bei der weiteren Schicht oder den weiteren Schichten um thermoplastische Materialien, besonders bevorzugt Polystyrol (PS) oder ein PS-Copolymer, ein Polyolefin, ein Polyolefin-Copolymer oder um ein thermoplastisches Elastomer (TPE). Bevorzugte thermoplastische Elastomere sind thermoplastische Elastomere auf der Basis einer Styrolcopolymerkomponente (TEP-S), von Ethylen/Propylen-Terpolymer/Propylen (TPE-V), eines Copolyesthers (TPE-E) oder auf Basis von Polyurethan (TPE-U). Ganz besonders bevorzugt handelt es sich bei der weiteren Schicht um eine Kombination aus mindestens zwei der genannten thermoplastischen Materialien und/oder thermoplastischen Elastomeren.

Insbesondere - jedoch nicht notwendigerweise - weist die Folie eine Deckschicht aus Polyethylenterephthalat (PET), Polymethylmethacrylat (PMMA) oder Polycarbonat (PC) oder aus einer Mischung aus mindestens zwei dieser Komponenten auf.

Die jeweiligen Schichten der Folie können bei der Coexstrusion durch geeignete Haftvermittlerschichten verbunden werden. Alternativ dazu werden sie mit einem Klebstoff zusammenkaschiert.

Vorzugsweise weist die Folie eine Dekorschicht auf, die besonders bevorzugt im Druckverfahren aufgetragen wird.

Bei einer besonders bevorzugten Ausführungsform der Folie umfasst diese Polypropylen, insbesondere PP-H (Polypropylen-Homopolymer) oder PP-Copolymer. Um eine besonders gute Stabilität beim Hinterspritzen zu erzielen, wird zumindest in einer der Schichten bzw. weiteren Schichten ein Polypropylen-Block-Copolymer (PP-BC) mit einem vergleichsweise niedrigen Schmelzindex (MFI, melt flow index) von weniger als 1g/10 Minuten (230 °C / 2,16 kg) eingesetzt. Außerdem ist ein Anteil von weniger als 30% eines elastischen Materials enthalten, wodurch die Formbarkeit bzw. die Dehnbarkeit der Folie erzielt wird. Hierzu wird beispielhaft ein thermoplastisches Elastomer verwendet. Die Folie kann ferner geringe Anteile (üblicherweise von weniger als 15%) von Zusatzstoffen, wie etwa Farbpigmenten, Füllstoffen, Stabilisatoren, Verarbeitungshilfsmitteln etc. aufweisen.

Zur Herstellung der Folie wird insbesondere das sogenannte Sleeve-Verfahren zum Glätten der Folie eingesetzt. Dabei wird die Polymerschmelze nach dem Austritt aus einer Breitschlitzdüse zwischen einem Metallband und einer Kühlwalze geführt und erhält so die notwendige Class-A-Oberfläche. Die Oberfläche der Folie bestimmt wesentlich die Qualität der auf die Folie aufzubringenden Lackschicht hinsichtlich ihrer Optik. Außerdem werden auf diese Weise augrund der geringen Orientierung und des geringen Kristallinitätsgrades die mechanischen Eigenschaften verbessert. Insbesondere die Tiefziehbarkeit bzw. die Formbarkeit wird auf diese Weise verbessert und die Folie erhält eine größere Zähigkeit.

Bei dem Substrat des erfindungsgemäßen Formkörpers handelt es sich vorzugsweise um ein schmelzeförmig verarbeitetes oder aber alternativ dazu um ein mattenförmiges thermoplastisches Material.

Vorzugsweise besteht das schmelzeförmig verarbeitete Material aus Polypropylen (PP), Acrylnitril/Butadien/Styrol (ABS), einem Gemisch aus ABS und Polycarbonat (PC), Polyamid (PA), einem thermoplastischen Elastomer (TPE) oder um ein thermoplastisches Elastomer auf der Basis von Naturkautschuk und/oder Polypropylen (PP). Weiterhin besteht das schmelzeförmig verarbeitete Material vorzugsweise aus einer Mischung aus mindestens zwei dieser Werkstoffe.

Besonders bevorzugt weist das schmelzeförmig verarbeitete Material Füllstoffe auf. Beispielhafte Füllstoffe sind Talkum, Kreide sowie Wollastonit. Des weiteren kann das schmelzeförmig verarbeitete Material Verstärkungsstoffe, wie z. B. Glasfasern, Naturfasern, Kohlenstofffasern oder textilartige Verstärkungen, wie z. B. Glasfasermatten oder Naturfasermatten aufweisen, um seine mechanische Stabilität zu erhöhen. Weiterhin bevorzugt werden dem schmelzeförmig verarbeiteten Material porenbildende, wie z. B. physikalische oder chemische Treibmittel oder gasbeladene Elastomerkugeln, beigemischt.

Das mattenförmige thermoplastische Material weist vorzugsweise Fasern, z. B. Naturfasern, Glasfasern oder Kohlenstofffasern, und einem thermoplastischen Bindemittel, wie beispielsweise Polypropylen auf. Das thermoplastische Bindemittel kann in Form von Fasern oder Pulver den übrigen Fasern zugemischt werden.

Das erfindungsgemäße Verkleidungsteil wird beispielsweise hergestellt, indem das thermoplastische Material hinter die Folie gespritzt, gepresst oder geprägt wird. Vorzugsweise erfolgt das Hinterspritzen wie es in der DE 10 2005 039 600, die hiermit als Referenz eingeführt wird und somit als Teil der Offenbarung gilt.

Das mattenförmige Substrat wird vor seiner Verbindung mit der Folie vorzugsweise vorgewärmt und dann in einem formgebenden Werkzeug mit der Folie verpresst oder verprägt.

Die Folie wird vorzugsweise als 2D-Folie gegebenenfalls vorgewärmt oder nach vorhergehender Verformung der Folie, z. B. Tiefziehen, in das formgebende Werkzeug eingelegt und dort mit dem Substrat, beispielsweise durch Hinterspritzen, Hinterpressen oder Hinterprägen, verbunden. Gegebenenfalls wird die Folie vor dem Einlegen in das formgebende Werkzeug in eine geeignete Kontur geschnitten, beispielsweise gestanzt.

Die Oberflächenstruktur des erfindungsgemäßen Verkleidungsteils kann durch eine entsprechende Oberfläche des formgebenden Werkzeugs gebildet werden. Dieses kann sowohl eine polierte als auch eine texturierte Oberfläche aufweisen, so dass Verkleidungsteile mit einer glatten oder einer genarbten Oberfläche herstellbar sind.

## Patentansprüche

1. Herstellungsverfahren Verkleidungsteil für den Innenraum eines Kraftfahrzeuges umfassend ein Substrat und eine damit verbundene Folie, wobei die Folie aus Polypropylen (PP) oder einem Polypropylen-Copolymeren besteht, wobei die Folie auf ihrer dem Substrat abgewandten Seite eine Lackschicht aufweist,
wobei das Substrat und die Folie geformy Sind, **dadurch gekennzeichnet, dass** eine Formgebung sowohl des Substrates als auch der Folie mit Samt der Lackschicht erfolgt und wobei während dieses Formschrittes gleichzeitig auch eine Narbung aut der Sichtseite des Lackes und aut der Sichtseite der Folie erfolgt.

2. Herstellungsverfahren nach Anspruch 1, **dadurch gekennzeichnet, dass** die Schichtdicke der Folie kleiner als etwa 500 µm ist, bevorzugt kleiner als oder gleich etwa 400 µm ist, ganz besonders bevorzugt von weniger als oder etwa gleich 300 µm ist oder im Bereich zwischen etwa 300 µm und etwa 400 µm ist.

3. Herstellungsverfahren nach Anspruch 1 oder 2, **dadurch gekennzeichnet, dass** die Lackschicht eine Schichtdicke von etwa 1 µm bis etwa 30 µm aufweist,, bevorzugt von etwa 5 µm bis etwa 20 µm, besonders bevorzugt von etwa 10 µm.

4. Herstellungsverfahren nach Anspruch 1 - 3, **dadurch gekennzeichnet, dass** die Lackschicht polyurethanbasiert vorgesehen ist, bevorzugt ein reaktives Zweikomponenten-Polyurethan-System umfasst.

5. Herstellungsverfahren nach Anspruch 1 - 4, **dadurch gekennzeichnet, dass** die Lackschicht eine hohe Kratzbeständigkeit und/oder eine hohe Chemikalienbeständigkeit und/oder eine hohe UV-Beständigkeit und/oder eine hohe Schreibunempfindlichkeit aufweist.

6. Herstellungsverfahren nach einem der Ansprüche1 - 5, **dadurch gekennzeichnet, dass** die Lackschicht optisch eine matte Anmutung aufweist sowie weiterhin einen haptisch weichen Griffeindruck aufweist.

7. Herstellungsverfahren nach einem der voranstehenden Ansprüche, **dadurch gekennzeichnet, dass** die Folie eine Schicht aufweist oder dass die Folie eine Schicht und eine weitere Schicht aufweist.

8. Herstellungsverfahren nach Anspruch 7, **dadurch gekennzeichnet, dass** die Folie ein Polypropylen oder Polypropylen-Copolymer mit einem Schmelzindex (MFI, melt flow index) von kleiner als oder gleich 1 g/10 min (230°C / 2,16 kg) aufweist, wobei das Polypropylen bevorzugt ein Polypropylen-Block-Copolymer (PP-BC) ist.

9. Herstellungsverfahren nach Anspruch 8, **dadurch gekennzeichnet, dass** das Polypropylen oder Polypropylen-Copolymer (PP-BC) mit einem thermoplastischen Elastomer (TPE) abgemischt ist, wobei der Anteil des thermoplastischen Elastomers (TPE) bevorzugt kleiner als oder gleich 30% bezogen auf die Mischung ist.

10. Herstellungsverfahren einem der Ansprüche 7 bis 9, **dadurch gekennzeichnet, dass** die weitere Schicht ein thermoplastisches Material, vorzugsweise PS oder PS-Copolymer, Polyolefin, Polyolefin-Copolymer oder ein thermoplastisches Elastomer, vorzugsweise TPE-S, TPE-V, TPE-E oder TPE-U, oder eine Kombination aus mindestens zwei Werkstoffen ist.

11. Herstellungsverfahren nach einem der Ansprüche 7 bis 10, **dadurch gekennzeichnet, dass** bei einer mehrschichtigen Folie die Folie eine Decksicht aufweist, wobei die Deckschicht PET, PMMA oder PC oder deren Mischung aufweist.

12. Herstellungsverfahren nach einem der Ansprüche 7 bis 11, **dadurch gekennzeichnet, dass** die Schicht und die weitere Schicht durch einen Haftvermittler miteinander verbunden sind.

13. Herstellungsverfahren nach einem der voranstehenden Ansprüche, **dadurch gekennzeichnet, dass** die Folie eine im Druckverfahren aufgebrachte Dekorschicht aufweist.

14. Herstellungsverfahren nach einem der voranstehenden Ansprüche, **dadurch gekennzeichnet, dass** Substrat ein schmelzeförmig verarbeitetes oder mattenförmiges thermoplastisches Material ist.

15. Herstellungsverfahren nach Anspruch 14, **dadurch gekennzeichnet, dass** das schmelzeförmig verarbeitete Material PP, ABS, ABS und PC, PA, TPE, TPV oder eine Mischung aus mindestens zwei dieser Werkstoffe ist.

16. Herstellungsverfahren nach einem der Ansprüche 14 oder 15, **dadurch gekennzeichnet, dass** das schmelzeförmig verarbeitete Material Füllstoffe aufweist.

17. Herstellungsverfahren nach einem der Ansprüche 14 - 16, **dadurch gekennzeichnet, dass** mattenförmige thermoplastische Material Fasern und/oder ein Bindemittel aufweist.

## Claims

1. Production process for a trim part for the interior of a motor vehicle, encompassing a substrate and a foil bonded thereto, where the foil is composed of polypropylene (PP) or of a polypropylene copolymer, where the foil has, on its side facing away from the substrate, a layer of coating, where the substrate and the foil have been shaped, **characterized in that** not only the substrate but also the foil together with the layer of coating are shaped, and where, during this shaping step, a grain is produced simultaneously on the visible side of the coating and on the visible side of the foil.

2. Production process according to Claim 1, **characterized in that** the layer thickness of the foil is smaller than about 500 µm, preferably smaller than or equal to about 400 µm, very particularly preferably smaller than or about equal to 300 µm, or is in the range from about 300 µm to about 400 µm.

3. Production process according to Claim 1 or 2, **characterized in that** the layer thickness of the layer of coating is from about 1 µm to about 30 µm, preferably from about 5 µm to about 20 µm, particularly preferably about 10 µm.

4. Production process according to Claims 1-3, **characterized in that** the layer of coating provided is polyurethane-based, preferably encompassing a reactive two-component polyurethane system.

5. Production process according to Claims 1-4, **characterized in that** the layer of coating has high scratch resistance and/or high chemicals resistance, and/or high UV resistance, and/or high write resistance.

6. Production process according to any of Claims 1-5, **characterized in that** the layer of coating is visually perceived as matt, and moreover feels soft to the touch.

7. Production process according to any of the preceding claims, **characterized in that** the foil has one layer, or that the foil has one layer and one further layer.

8. Production process according to Claim 7, **characterized in that** the foil is a polypropylene or polypropylene copolymer whose melt index (MFI, melt flow index) is smaller than or equal to 1 g/10 min (230°C/2.16 kg), the polypropylene preferably being a polypropylene block copolymer (PPBC).

9. Production process according to Claim 8, **characterized in that** the polypropylene or polypropylene copolymer (PPBC) has been blended with a thermoplastic elastomer (TPE), the proportion of the thermoplastic elastomer (TPE) preferably being smaller than or equal to 30%, based on the mixture.

10. Production process according to any of Claims 7 to 9, **characterized in that** the further layer is a thermoplastic material, preferably PS or PS copolymer, polyolefin, polyolefin copolymer, or a thermoplastic elastomer, preferably TPES, TPEV, TPEE, or TPEU, or a combination composed of at least two materials.

11. Production process according to any of Claims 7 to 10, **characterized in that** in the case of a multilayer foil the foil has an outer layer, comprising PET, PMMA or PC, or a mixture of these.

12. Production process according to any of Claims 7 to 11, **characterized in that** the layer and the further layer have been bonded to one another by an adhesion promoter.

13. Production process according to any of the preceding claims, **characterized in that** the foil has a decorative layer applied by the printing process.

14. Production process according to any of the preceding claims, **characterized in that** the substrate is a thermoplastic material which takes the form of a mat or which is processed in the form of a melt.

15. Production process according to Claim 14, **characterized in that** the material processed in the form of a melt is PP, ABS, ABS and PC, PA, TPE, TPV, or a mixture composed of at least two of these materials.

16. Production process according to Claims 14 or 15, **characterized in that** the material processed in the form of a melt comprises fillers.

17. Production process according to any of Claims 14-16, **characterized in that** thermoplastic material in the form of a mat comprises fibers and/or a binder.

## Revendications

1. Procédé de fabrication d'une partie d'habillement pour l'intérieur d'un véhicule automobile, comprenant un substrat et une feuille reliée à celui-ci, la feuille étant constituée de polypropylène (PP) ou d'un copolymère de polypropylène, la feuille comprenant une couche de laque sur son côté opposé au substrat, le substrat et la feuille étant façonnés, **caractérisé en ce qu'**un façonnage du substrat et de la feuille, y compris la couche de laque, a lieu et une structuration a également lieu simultanément pendant cette étape de façonnage sur le côté visible de la laque et sur le côté visible de la feuille.

2. Procédé de fabrication selon la revendication 1, **caractérisé en ce que** l'épaisseur de couche de la feuille est inférieure à environ 500 µm, de préférence inférieure ou égale à environ 400 µm, de manière tout particulièrement préférée inférieure ou égale à environ 300 µm ou dans la plage comprise entre environ 300 µm et environ 400 µm.

3. Procédé de fabrication selon la revendication 1 ou 2, **caractérisé en ce que** la couche de laque présente une épaisseur de couche d'environ 1 µm à environ 30 µm, de préférence d'environ 5 µm à environ 20 µm, de manière particulièrement préférée d'environ 10 µm.

4. Procédé de fabrication selon les revendications 1 à 3, **caractérisé en ce que** la couche de laque est à base de polyuréthane, comprend de préférence un système polyuréthane bicomposant réactif.

5. Procédé de fabrication selon les revendications 1 à 4, **caractérisé en ce que** la couche de laque présente une résistance élevée aux éraflures et/ou une résistance élevée aux produits chimiques et/ou une résistance élevée aux UV et/ou une résistance élevée à l'inscription.

6. Procédé de fabrication selon l'une quelconque des revendications 1 à 5, **caractérisé en ce que** la couche de laque présente optiquement un aspect mat et présente également haptiquement un effet de toucher doux.

7. Procédé de fabrication selon l'une quelconque des revendications précédentes, **caractérisé en ce que** la feuille comprend une couche ou **en ce que** la feuille comprend une couche et une couche supplémentaire.

8. Procédé de fabrication selon la revendication 7, **caractérisé en ce que** la feuille comprend un polypropylène ou un copolymère de polypropylène d'un indice de fluidité (MFI, melt flow index) inférieur ou égal à 1 g/10 min (230 °C, 2,16 kg), le polypropylène étant de préférence un copolymère séquencé de polypropylène (PP-BC).

9. Procédé de fabrication selon la revendication 8, **caractérisé en ce que** le polypropylène ou le copolymère de polypropylène (PP-BC) est mélangé avec un élastomère thermoplastique (TPE), la proportion de l'élastomère thermoplastique (TPE) étant de préférence inférieure ou égale à 30 % par rapport au mélange.

10. Procédé de fabrication selon l'une quelconque des revendications 7 à 9, **caractérisé en ce que** la couche supplémentaire est un matériau thermoplastique, de préférence du PS ou un copolymère de PS, une polyoléfine, un copolymère de polyoléfine ou un élastomère thermoplastique, de préférence TPE-S, TPE-V, TPE-E ou TPE-U, ou une combinaison d'au moins deux matériaux.

11. Procédé de fabrication selon l'une quelconque des revendications 7 à 10, **caractérisé en ce qu'**en cas de feuille multicouche, la feuille comprend une couche supérieure, la couche supérieure comprenant du PET, du PMMA ou du PC ou leur mélange.

12. Procédé de fabrication selon l'une quelconque des revendications 7 à 11, **caractérisé en ce que** la couche et la couche supplémentaire sont reliées l'une à l'autre par un promoteur d'adhésion.

13. Procédé de fabrication selon l'une quelconque des revendications précédentes, **caractérisé en ce que** la feuille comprend une couche décorative appliquée par un procédé d'impression.

14. Procédé de fabrication selon l'une quelconque des revendications précédentes, **caractérisé en ce que** le substrat est un matériau thermoplastique sous forme de mat ou transformé sous forme fondue.

15. Procédé de fabrication selon la revendication 14, **caractérisé en ce que** le matériau transformé sous forme fondue est du PP, de l'ABS, de l'ABS et du PC, du PA, du TPE, du TPV ou un mélange d'au moins deux de ces matériaux.

16. Procédé de fabrication selon l'une quelconque des revendications 14 ou 15, **caractérisé en ce que** le matériau transformé sous forme fondue comprend des charges.

17. Procédé de fabrication selon l'une quelconque des revendications 14 à 16, **caractérisé en ce que** le matériau thermoplastique sous forme de mat comprend des fibres et/ou un liant.
